Europäisches Patentamt

(19) European Patent Office

Office européen des brevets

(11) Publication number:

**0 326 388**
**A2**

## (12) EUROPEAN PATENT APPLICATION

(21) Application number: 89300763.3

(22) Date of filing: 26.01.89

(51) Int. Cl.⁴: **F 22 B 1/18**
**B 01 D 53/34**

(30) Priority: 29.01.88 US 150164

(43) Date of publication of application:
02.08.89 Bulletin 89/31

(84) Designated Contracting States:
AT BE CH DE ES FR GB GR IT LI LU NL SE

(71) Applicant: JOHNSON MATTHEY, INC.,
4 Malin Road
Malvern Pennsylvania 19355 (US)

(72) Inventor: Kashmer, Bernard A.
5 Greentree Road
Burlington, New Jersey 08016 (US)

Harris, Mark Nader-Jonaydi
11606 Hendrik Terrace
Philadelphia, Pennsylvania 19116 (US)

Cheesman, Randolph M.
91 St. Johns' Drive
Glen Mills, Pennsylvania 19342 (US)

(74) Representative: Burford, Anthony Frederick et al
W.H. Beck, Greener & Co. 7 Stone Buildings Lincoln's Inn
London WC2A 3SZ (GB)

(54) Waste heat recovery having combined CO and NOx removal apparatus and method.

㊼ The invention provides an improvement in a waste heat recovery system in which exhaust gases discharged from a gas turbine or the like are directed to flow alaong a discharge path (18) in heat exchange relation (28, 30, 32, 34) with a continuous supply of feedwater (22) to contact a carbon monoxide removal catalyst and, after admixture with ammonia a nitrous oxide removal catalyst. The improvement comprises locating both the carbon monoxide-removal catalyst assembly (44) and the nitrous oxide-removal catalyst assembly (46) in a common zone of substantially uniform temperature.

EP 0 326 388 A2

## Description

### WASTE HEAT RECOVERY HAVING COMBINED CO AND NOx REMOVAL APPARATUS AND METHOD

This invention relates to waste heat recovery systems and, more particularly, to the removal of contaminants in waste heat recovery systems.

The type of waste heat recovery system herein contemplated is a system of substantially significant magnitude such as the discharge from an industrial installation utilizing a gas turbine or the like. It is conventional practice in such systems to provide a housing which defines a gas passage for directing the exhaust gases discharged from the gas turbine to flow along a discharge path. Mounted within the gas passage in heat exchange relation with respect to the exhaust gases flowing along the discharge path are a series of heat exchange tubes which serve to direct a continuous supply of feedwater in heat exchange relation with the exhaust gases so as to convert the feed water into a continuous supply of steam for use elsewhere, such as operating a steam prime mover or the like. Usually, the heat exchange tubes are grouped together so that the flow of feedwater is in a direction counter to the direction of gas flow so that the uppermost bank of tubes are referred to as a superheater, the lowermost bank of tubes are designated an economizer, and the intermediate bank of tubes are designated as either a boiler or an evaporator.

The need to control the pollution of air has led to the addition in such heat recovery systems of an assembly which is capable of removing nitrous oxides from the exhaust gases. Conventionally, such means takes the form of a sparger assembly for introducing ammonia into the exhaust gases at a position upstream from a porous substrate having a selective catalytic reducing catalyst (SCR) formed thereon for contacting the mixture of ammonia and exhaust gases passing through the porous substrate so as to create a chemical reaction which has the effect of removing NOx. Similarly, it has been the practice heretofore in some installations to also provide for the removal of carbon monoxide from the exhaust gases prior to discharge. Here again, a porous substrate is utilized which has a catalyst for contacting the exhaust gases passing through the porous substrate and creating a chemical reaction which serves to remove the carbon monoxide. The SCR and CO catalysts used for such purposes are well known in the art.

Heretofore, the porous substrate containing the CO removal catalyst and the porous substrate containing the SCR catalyst have been placed in the system in a temperature zone which presents the most desirable temperature of reaction taking into account the temperature in such zone both at full load and partial load. In actual practice, the porous substrate containing the CO removal catalyst was placed in the gas passage at a position upstream of the porous substrate containing the NOx removal catalyst, there being two or more groups of heat exchange tubes between the two porous substrates. Typically, the sparger system for introducing the ammonia for mixture with the exhaust gases prior to contact with the NOx removal catalyst was likewise positioned in spaced upstream relation so that the heat exchange tubes between the sparger system and SCR catalyst substrate serve to effect an intimate intermixture between the introduced ammonia and the exhaust gases. While arrangements of this type have proven to be satisfactory, there is always a need to provide apparatus which will achieve the same end results in a more cost effective manner.

An object of the present invention is to provide apparatus which will fulfill the need enunciated above. Applicant has ascertained that there are many situations presented where the amount of CO removal which is required in a particular system is such that the CO catalyst substrate can be moved within the system out of the position where the temperature is most desirable. In these situations, applicant has noted that substantial cost savings can be achieved by mounting the porous substrate containing the CO removal catalyst in the same temperature zone and within the same housing or support structure as the SCR catalyst substrate. Accordingly, in accordance with the principles of the present invention, the above-noted objective is achieved by providing an improvement in a known waste heat recovery system in which the assembly for removing CO from the exhaust gases is mounted in a predetermined generally constant temperature zone in the gas passage so as to create a chemical reaction with the exhaust gases at a predetermined temperature and mounting the assembly for removing NOx from the exhaust gases in the same constant temperature zone within the gas passage in a position adjacent the CO removing assembly so as to create a chemical reaction with a mixture of a chemical additive, such as ammonia, and the exhaust gases at a temperature substantially the same as the predetermined temperature at which the chemical reaction for CO removal takes place.

According to the present invention, there is provided a waste heat recovery system comprising means defining a gas passage for directing exhaust gases to flow along a discharge path; heat exchange tube means within said gas passage for directing a continuous supply of feedwater in heat exchange relation with said exhaust gases CO-removing means mounted in said gas passage for removing CO from said exhaust gases by creating a chemical reaction with the exhaust gases; and NOx-removing means mounted in said gas passage for removing NOx from said exhaust gases by creating a chemical reaction with a mixture of a chemical additive and the exhaust gases, characterized in that both of said removing means are mounted in a common zone of substantially uniform temperature.

The invention also provides a waste heat recovery method in which exhaust gases are directed to flow along a discharge path in heat exchange relation with a continuous supply of feedwater; CO is removed from the exhaust gases flowing along said path by creating a chemical reaction with the exhaust gases in the presence of a catalyst; and $NO_x$ is removed from the exhaust gases flowing along said path by creating a chemical reaction with a mixture of ammonia and the exhaust gases in the presence of a catalyst; characterized in that the CO and $NO_x$ removal are conducted at substantially the same temperature.

Preferably, the CO-removing means is mounted upstream from said $NO_x$-removing means and it is especially preferred that sparger means is mounted in the uniform temperature zone between the two removing means. The sparger continuously introduces the chemical additive in such a way as to accomplish the mixing of the introduced chemical additive with the exhaust gases within said uniform temperature zone.

In a preferred embodiment, the gas passage defining means includes a separate peripheral support assembly defining the uniform temperature zone and the CO-removing means, $NO_x$-removing means and sparger means are supported in this support assembly.

The CO-removing means suitably comprises a group of first catalyst panel assemblies mounted within the support assembly each of the first catalyst panel assemblies including first porous substrate means positioned to permit passage of exhaust gases therethrough and CO-removal catalyst means on the first porous substrate means for contacting exhaust gases passing through the first porous substrate means to create the CO-removal chemical reaction. Similarly, the $NO_x$-removing means suitably comprises a group of second catalyst panel assemblies mounted within the support assembly, each of the second panel assemblies including second porous substrate means positioned to permit passage of the mixture of the chemical additive and exhaust gases therethrough and selective catalytic reducing catalyst means on the second porous substrate means for contacting the mixture of the chemical additive and exhaust gases passing through the second porous substrate means to create the $NO_x$-removal chemical reaction.

Preferably, each of the first catalyst panel assemblies comprises a first peripheral panel frame structure defining a first central area, the first porous substrate means comprising a plurality of first catalyst blocks each providing first passages for the flow of exhaust gases therethrough, the CO catalyst means being carried by the first catalyst blocks in a position to contact the exhaust gases flowing through the first passages, and means fixed to the first panel frame structure for supporting the first blocks in side-by-side relation within the first central area so that the first passages of the first catalyst blocks provide the sole gas flow path through the first central area of the first panel frame structure.

Each of the second catalyst panel assemblies also preferably comprises a second peripheral panel frame structure defining a second central area, the second porous substrate means comprising a plurality of second catalyst blocks each providing second passages for the flow of exhaust gases mixed with the chemical additive therethrough, the selective catalytic reducing catalyst means being carried by the second block in a position to contact the gasses flowing through the second catalyst passages, and means fixed to the second panel frame structure for supporting the second catalyst blocks in side-by-side relation within the second central area so that the second passges of the second catalyst blocks provide the sole gas flow path through the second central area of the second panel frame structure.

Advantageously, the support assembly includes an outer ambient temperature peripheral frame structure, an inner high temperature peripheral frame structure mounted within the outer peripheral frame structure for temperature responsive expansion and contraction with respect thereto, and expansible and contractible high temperature resistant peripheral seal means between the inner and outer peripheral frame structures for maintaining a flow-preventing seal between the inner and outer peripheral frame structures, the inner peripheral frame structure including means for removably receiving each catalyst panel assembly and supporting the same in an operative position within the exterior periphery of the inner peripheral frame structure, door means openable to permit the catalyst panel assemblies to be moved in and removed from their respective operative positions and closable to fixedly secure said catalyst panel assemblies in their respective operative positions within the exterior periphery of the inner peripheral frame structure, each panel frame structure exteriorly cooperating with the associated door means and the associated interior of said inner peripheral frame structure so as to ensure that the flow of high temperature exhaust gases within the gas passage is substantially solely through the passages of the catalyst blocks of the plurality of catalyst panel assemblies when fixedly secured in their respective positions.

The sparger means for introducing said chemical additive preferably comprises a regular network of pipes within thed support assembly extending transversely across the gas passage downstream and adjacent the CO-removing means and spaced upstream from the $NO_x$-removing means, and a multiplicity of regularly spaced emitters connected with the pipes for emitting a chemical additive under pressure contained therein. Each emitter suitably includes nozzle means positioned to emit the chemical additive in a downstream direction and baffle means for deflecting and dispersing the chemical additive emitted from the nozzle means in a transverse direction so as to form, with the other emitters, a continuous transversely dispersed supply of chemical additive substantially throughout the flow path of the exhaust gases immediately after flow through the network of pipes so that mixing occurs in a relatively short distance of movement together after initial contact.

The invention also provides an apparatus for effecting high temperature catalytic conversion treatment of exhaust gases flowing in a gas passage discharge flow path of an industrial installation comprising a plurality of separate catalyst panel assemblies, and a panel support assembly arranged to be mounted within the exhaust path and to separately removably support each of said plurality of catalyst panel assemblies so that high temperature exhaust gases within the gas passage will flow therethrough in operation and each panel assembly can be conveniently serviced by simple removal, each of the catalyst panel assemblies comprising a removable peripheral panel frame structure defining a central area, a plurality of catalyst blocks each providing passages for the flow of exhaust gases therethrough, catalyst means carried by the blocks in a position to contact the gases blowing through said passages, and means fixed to the panel frame structure for supporting the plurality of blocks in side-by-side relation within the central area so that the passages of the side-by-side blocks provide the sole gas flow path through the central area of the panel frame struture, the panel support assembly comprising an outer ambient temperature peripheral frame structure and an inner high temperature peripheral frame structure mounted within the outer peripheral frame structure, the inner peripheral frame structure including means for removably receiving the catalyst panel assemblies and supporting the same in operative positions within the exterior periphery of the inner peripheral frame structure, door means operable to permit the catalyst panel assemblies to be moved in and removed from their respective operative positions and closable to fixedly secure the plurality of catalyst panel assemblies in their respective operative positions within the exterior periphery of the inner peripheral panel frame structure, and each panel frame structure exteriorly cooperating with the associated door means and the associated interior of the inner peripheral frame structure so as to ensure that the flow of high temperature exhaust gases within the exhaust path is substantially solely through the passages of the catalyst blocks of the plurality of catalyst panel assemblies when fixedly secured in their respective operative positions, characterized in that the plurality of catalyst panel assemblies includes two groups of catalyst panel assemblies, each group when fixedly secured in their respective operative positions providing passages for the entire flow of exhaust gases within the gas passage so that the exhaust gases flow sequentially through the passages of both groups of catalyst panel assemblies, the catalyst means of one of the two groups of catalyst panel assemblies is operable to remove CO from exhaust gases by a chemical reaction with the exhaust gases, and the catalyst means of the other of the two groups of catalyst panel assemblies is operable to remove $NO_x$ from the exhaust gases by a chemical reaction with a mixture of the exhaust gases and a chemical additive.

The invention may best be understood with reference to the accompanying drawings wherein an illustrative embodiment is show.

IN THE DRAWINGS:

Figure 1 is a schematic flow diagram of an exemplary waste heat recovery system embodying the principles of the present invention;

Figure 2 is a fragmentary top plan view of the portion of the dischrage path of the system between the inlet and outlet thereof, with parts broken away for purposes of clearer illustration;

Figure 3 is a side elevational view of the apparatus for effecting constant temperature catalytic removal of both CO and $NO_x$ constructed in accordance with the principles of the present invention;

Figure 4 is a front elevational view of the apparatus shown in Figure 4;

Figure 5 is a sectional view taken along the line 5-5 of Figure 4;

Figure 6 is a sectional view taken along the line 6-6 of Figure 3;

Figure 7 is a sectional view taken along the line 7-7 of Figure 3;

Figure 8 is a fragmentary detailed sectional view taken along the line 8-8 of Figure 4.

Figure 9 is a front elevational view of a catalyst panel assembly embodying the principles of the present invention forming a part of the apparatus shown in Figure 4;

Figure 10 is an enlarged end view of the panel assembly shown in Figure 9;

Figure 11 is an enlarged detailed sectional view taken along the line 11-11 of Figure 9;

Figure 12 is a sectional view taken along the line 12-12 of Figure 5;

Figure 13 is an enlarged detailed sectional view taken along the line 13-13 of Figure 12; and

Figure 14 is a sectional view taken along the line 14-14 of Figure 13.

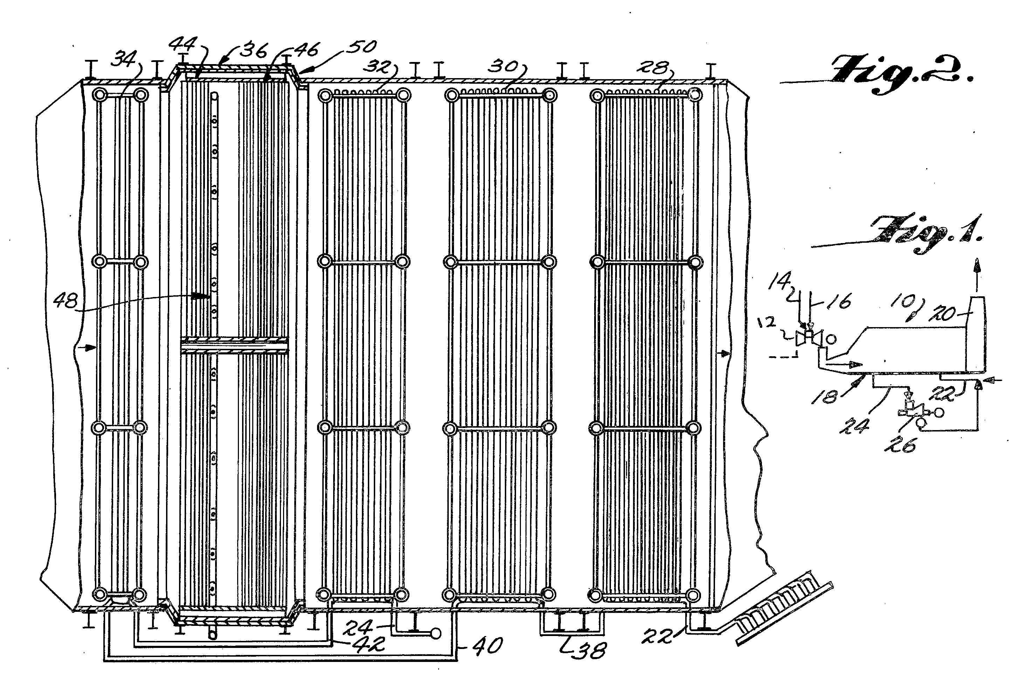

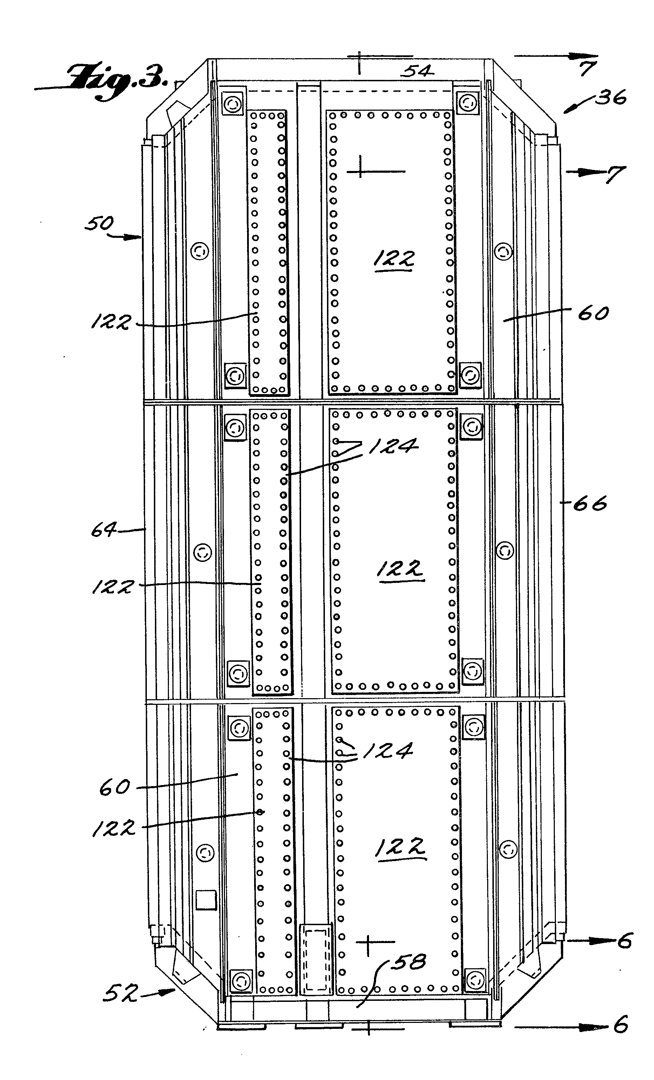

Referring now more particularly to the drawings, there is shown in Figure 1 a schematic diagram of an exemplary waste heat recovery system, generally indicated at 10, which embodies the principles of the present invention. As shown, the system 10 includes a gas turbine 12 to which fuel and air are delivered through lines 14 and 16 respectively. Combustion of the fuel and air drives the gas turbine and the products of combustion are collected and delivered to the inlet end of a passage defining means, generally indicated at 18. The passage 18 provides a flow path for the products of combustion or exhaust gases from the gas turbine 12 between the inlet end thereof and an outlet end where the exhaust gases are allowed to pass upwardly through a stack 20 and then into the atmosphere.

During the flow of the exhaust gases through the passage 18, much of the heat of the exhaust gases is exchanged with a continuous supply of water as from a line 22, so as to produce a continuous supply of steam, as in a line 24. The steam in line 24 can be used in any desired manner, as, for example, in driving a steam prime mover 26. Also during the flow of exhaust gases through the passage 18, the exhaust gases are chemically catalytically treated to remove the CO and $NO_x$ content therein so that the gases that are allowed to pass into the atmosphere from the stack 20 are free of these pollutants to a specified level.

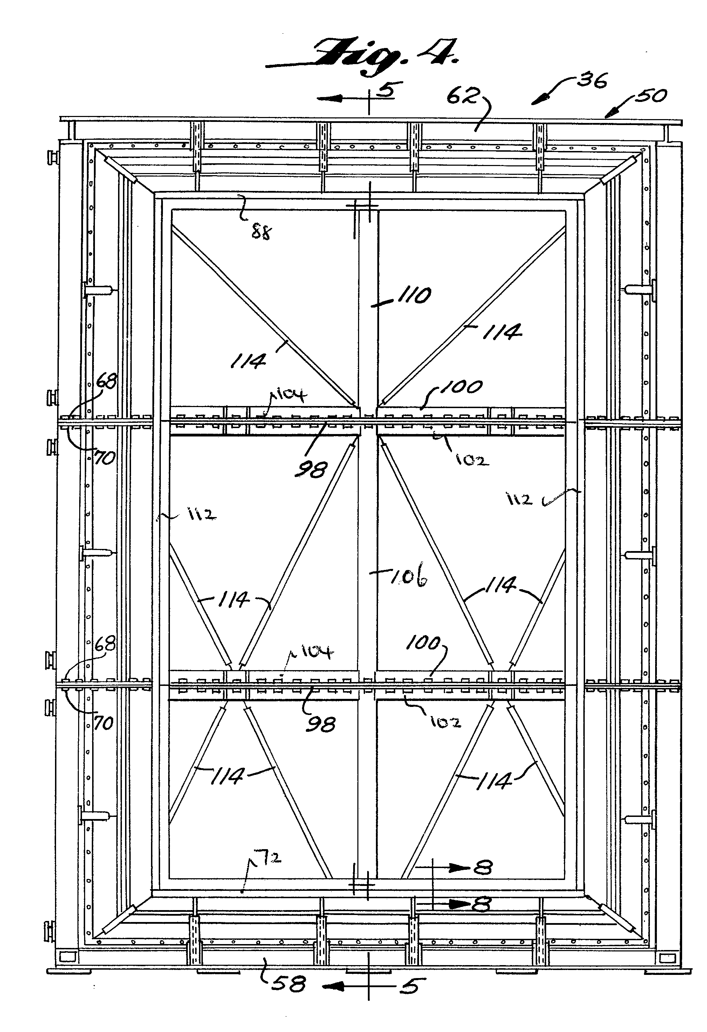

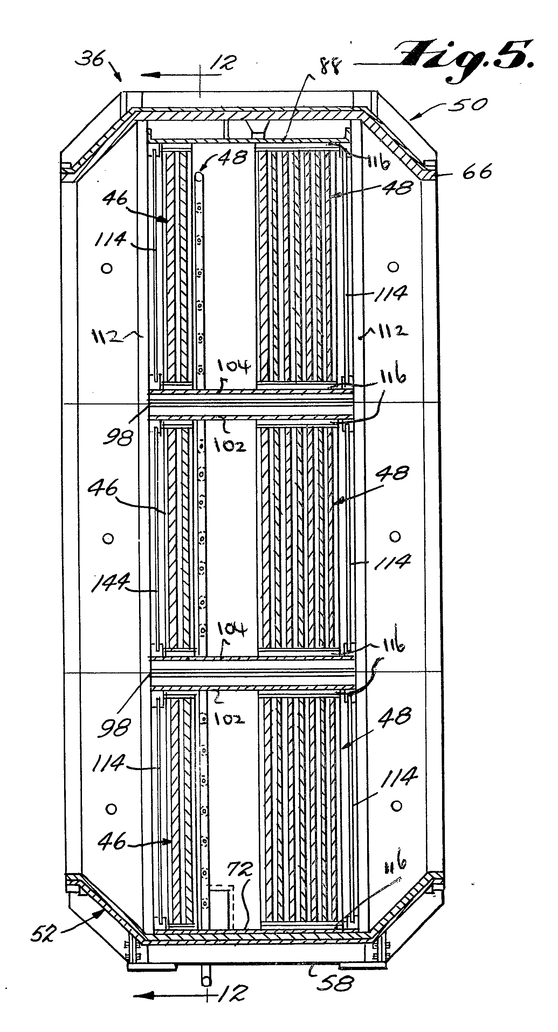

Referring now more particularly to Figure 2, there is shown within the passage 18 a series of heat exchanger tube assemblies 28, 30, 32, and 34 connected between lines 22 and 24 so that the continuous supply of water from the line 22 is progressively heated through heat exchange with the hot exhaust gases flowing in passage 18 so as to be delivered as a continuous supply of steam to line 24. Figure 2 also illustrates an apparatus, generally indicated at 36, for effecting the CO and $NO_x$ removal from the exhaust gases and its preferred position within the passage 18 among the heat exchanger tube assemblies. The position is within a generally constant temperature zone within the passage 18. What is meant by the term "generally constant" is that the temperature is generally constant throughout the zone in which the apparatus 36 is positioned. That generally constant temperature can vary depending upon changes in load of the gas turbine. Preferably, the temperature variation is within a range between 650°F and 750°F (350 - 400°C), both of which are exhaust gas temperatures. Just where in the passage 18 this zone will occur will depend upon the number of heat exchanger tube assemblies provided, and their manner of connection with respect to one another. For example, in the exemplary embodiment shown, the heat exchanger tube assembly 28 is positioned the furthest downstream within the passage 18 and is directly connected with water line 22. It is sometimes referred to as an economizer. In the embodiment shown, tube assemblies 30, 32, and 34 are interconnected so that tube assembly 30 is connected to the output of tube assembly 28, as by a line 38. The output of tube assembly 30 is connected, as by line 40, to tube assembly 34 which is positioned furthest upstream. Finally, the output of tube assembly 34 is connected, as by a line 42, to the tube assembly 32 whose output is connected directly to steam supply line 24. The tube assemblies 30, 32, and 34 constitute evaporators or boilers. While the exemplary arrangement does not include a tube assembly constituting a superheater, the provision of a superheater is contemplated as well as other hook-ups. It will be appreciated that because of the heat exchange which takes place as the exhaust gases pass through the tube assemblies, the zones within the passage 18 in which the tube assemblies are mounted are decreasing temperature zones rather than a generally constant temperature zone as is the case with respect to the zone of the apparatus 36.

The apparatus 36 includes, in general, a first multiplicity of separate CO catalyst panel assemblies, generally indicated at 44, a second multiplicity of separate $NO_x$ catalyst panel assemblies 46, a sparger assembly 48 for introducing ammonia into the exhaust gas flow, and a panel support assembly, generally indicated at 50, arranged to be mounted as a part of the passage 18 to separately removably support each of the CO catalyst panel assemblies in an upstream position therein so that the high temperature exhaust gases within the exhaust path will initially flow horizontally therethrough in operation.

The panel support assembly 50 also serves to support the sparger assembly 48 in a position adjacent and downstream of the CO catalyst panel assemblies and to removably support each of the $NO_x$ catalyst panel assemblies 46 in a downstream position spaced somewhat from the sparger assembly 48 so that the ammonia is introduced into the exhaust gases immediately after leaving the CO catalyst panel assemblies 44 enabling the two gases to be mixed together by the time that they pass together through the $NO_x$ catalyst panel assemblies 46. While it is within the contemplation of the present invention to utilize other types of catalyst beds and other types of support assemblies, it is preferable to utilize a removable panel arrangement.

As shown, the panel support assembly 50 comprises an outer ambient temperature peripheral frame structure, generally indicated at 52, and an inner high temperature peripheral frame structure, generally indicated at 54, carried by the outer peripheral frame structure 52 for temperature responsive expansion and contraction with respect thereto. Mounted between the outer peripheral frame structure 52 and the inner peripheral frame structure 54 is an expansible and contractible seal assembly, generally indicated at 56, which serves to provide a seal against the flow of exhaust gases between the two frame structures while at the same time accommodating the aforesaid temperature responsive expansion and contraction of the inner peripheral frame structure 54 with respect to the outer peripheral frame structure 52.

The outer peripheral frame structure 52, as shown, is of generally rectangular configuration and is preferably oriented vertically, as shown, so as to be connectable in the gas passage 18 as a component part thereof. The outer peripheral frame structure 52 may be of any desirable construction. As shown, it is a welded structure formed from sheet stock, angle irons and the like, and layer of suitable insulating material inwardly of the sheet stock so as to insure to the extent possible that the frame structure will remain at ambient temperature. As shown, the outer frame structure includes a bottom frame section 58 and two upwardly extending vertical side frame sections 60 extending upwardly from the ends of the bottom frame section 58. The upper ends of the side frame sections 60 are fixedly interconnected by a top frame section 62. An inlet duct transition peripheral section 64 is connected to the forward edges of the bottom, side and top sections and an outlet duct connecting section 66 is connected to the trailing edges of the bottom, side and top sections.

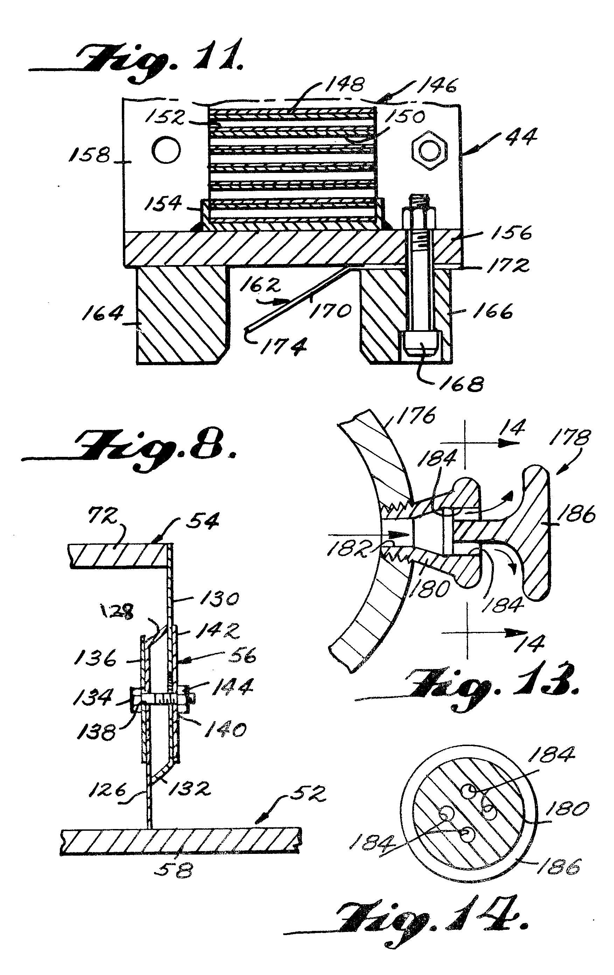

For purposes of transporting the outer peripheral frame structure from a position of fabrication to a position of installation, the side frame sections 60, each of which includes spaced hollow column members, are divided horizontally into a plurality of vertically stacked side frame portions. As shown, there are three such portions provided and the severed ends have attaching plates 68 welded thereto which extend beyond the periphery so as to provide marginal portions for the receipt of bolts 70 operable to secure the pairs of attaching plates 68 in abutting relation. (See Figure 4.)

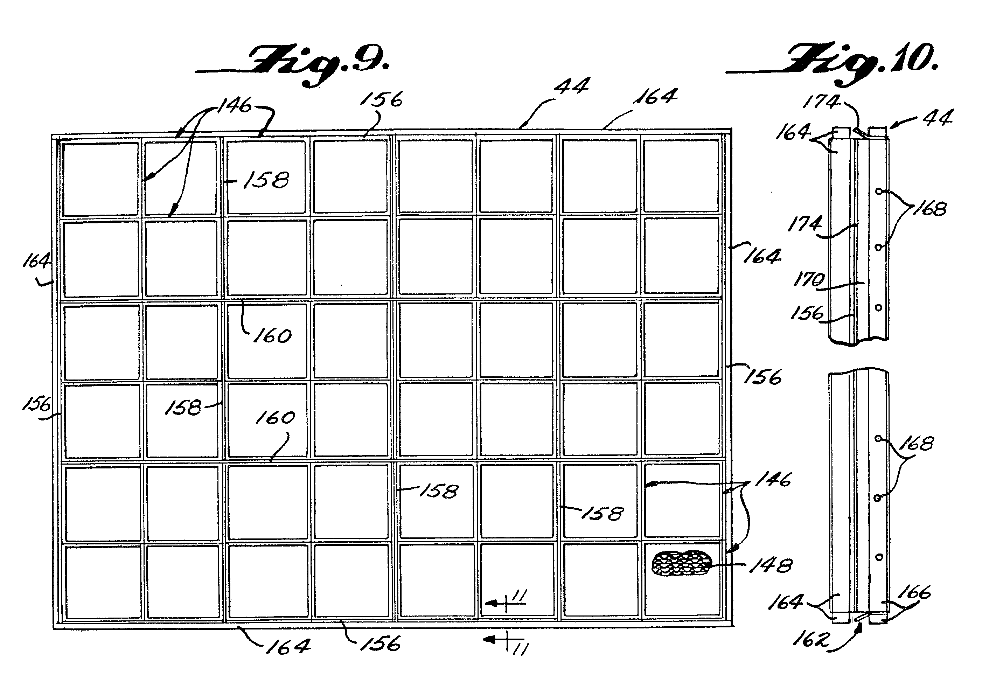

The inner peripheral frame structure 54 includes interior bottom frame member 72. The central portion of the bottom frame member 72 is fixed to the central portion of the bottom frame section 58 of the outer peripheral frame structure 52. As best shown in Figures 5 and 6, the interior bottom frame member 72 is formed with a series of openings 74. The openings 74 receive the upper ends of tubes 76 therein which form a part of the bottom frame section 58. Each tube 76 has welded to the upper exterior thereto a plate 78 which is of a size larger than the associated opening 74. The interior frame member 72 is thus supported for temperature responsive expansion and contraction horizontally outwardly from the central portion thereof by virtue of the sliding support provided by the plates 78. As best shown in Figure 6, the interior bottom frame member 72 has welded thereto a series of caps 80 which cover the upper ends of the tubes 76 and provide the appropriate airtight seal.

The inner peripheral frame structure 54 also includes inner side frame sections 82 extending upwardly from opposite ends of the interior bottom frame member 72. Preferably each side frame section 82 includes a pair of spaced hollow vertical extending columns 84. The inner peripheral frame structure 54 also includes a top frame section 86 which is of welded beam construction and which provides an interior top frame member 88. As best shown in Figure 7, the central portion of the top frame section 86 is formed with a vertical aperture 90 for receiving the lower end of a tubular central stabilizer 92 fixedly carried by the top frame section 62 of the outer peripheral frame structure 52. The arrangement is such as to stabilize the interior top frame section 86 against horizontal movement while accommodating temperature responsive vertical expansion and contraction. At the central portion of each end of the top frame section 86, a relatively large vertical opening 94 is provided for receiving the lower end of a tubular end stabilizer 96. The arrangement is such as to stabilize the associated end of the top frame section 86 against horizontal movement in the direction of flow while accommodating temperature responsive expansion and contraction horizontally in a direction outwardly of the central stabilizer 92, as well as vertically.

The side frame sections 82 of the inner peripheral frame structure 54 are horizontally divided for purposes of transportation facilitation, like outer side sections 60, and also to divide the interior space defined by the inner peripheral frame structure 54 into a plurality of vertically stacked spaces. As best shown in Figure 4, three vertically stacked spaces are provided. As before, the severed ends of the plurality of side frame portions formed by dividing the side frame sections 82 horizontally are welded to bolted mounting plates 98 which form a part of an intermediate interior horizontal frame section 100.

As best shown in Figure 4, each intermediate horizontal frame section 100 includes a lower horizontal frame member 102 and an upper horizontal frame member 104. Fixedly secured between the central portions of the lower horizontal frame member 102 and the upper horizontal frame member 104 of the two intermediate horizontal frame sections 100 is a central intermediate vertical frame section 106. As best shown in Figure 4, a lower intermediate vertical frame section 108 is similarly fixed between the bottom frame member 72 and the lower frame member 102 of the lowermost intermediate horizontal frame section 100 and an upper intermediate vertical frame section 110 is fixed between the top frame member 88 and the upper frame member 104 of the uppermost intermediate horizontal frame section 100. The vertical intermediate frame sections 106, 108, and 110 divide the three vertically stacked spaces into six spaces.

Each of the three intermediate vertical frame sections provide a pair of oppositely facing vertical side frame members 112. Each of the six vertical side frame members 112 defines an interior side of a panel receiving space, the top of which is defined either by the associated top frame member 88 or lower horizontal frame member 102 and the bottom of which is defined either by the associated bottom frame member 72 or upper horizontal frame member 104. Each of the panel receiving spaces opens outwardly through the exterior side opposite from the side frame member 112 and, specifically, between the associated two side portions of the columns 84. As best shown in Figure 4, the interior peripheral frame members which define the six spaces are braced by a series of forward and rearward diagonal brace members 114.

The interior frame members 72, 88, 102, 104, and 112 defining the six panel receiving spaces are each provided with a series of elongated horizontally spaced panel retaining elements 116. The shape of these retaining elements depends upon whether the panels are provided with peripheral seals as disclosed in the present drawings or whether the seals are eliminated as is explicitly contemplated by the present invention. When the seals are eliminated, the elements 116 are simply in the form of parallel bars each adjacent pair of which forms with the interior frame member to which it is welded a U-shaped pocket to surround an associated marginal edge of the catalyst panel assembly 44, 46 received therein. The close interengagement between the bars and the marginal edge surfaces of the panel assembly define a tortuous path which provides a path of greatest flow resistance reducing leakage to an acceptable value in many instances.

The number and position of the panel retaining elements 116 is such as to accommodate within each space approximately two CO catalyst panel assemblies 44 disposed in slightly spaced side-by-side relation at the upstream side and approximately seven $NO_x$ catalyst panel assemblies 46 disposed in slightly spaced side-by-side relation at the downstream side with a space between innermost CO and $NO_x$ catalyst panel assemblies.

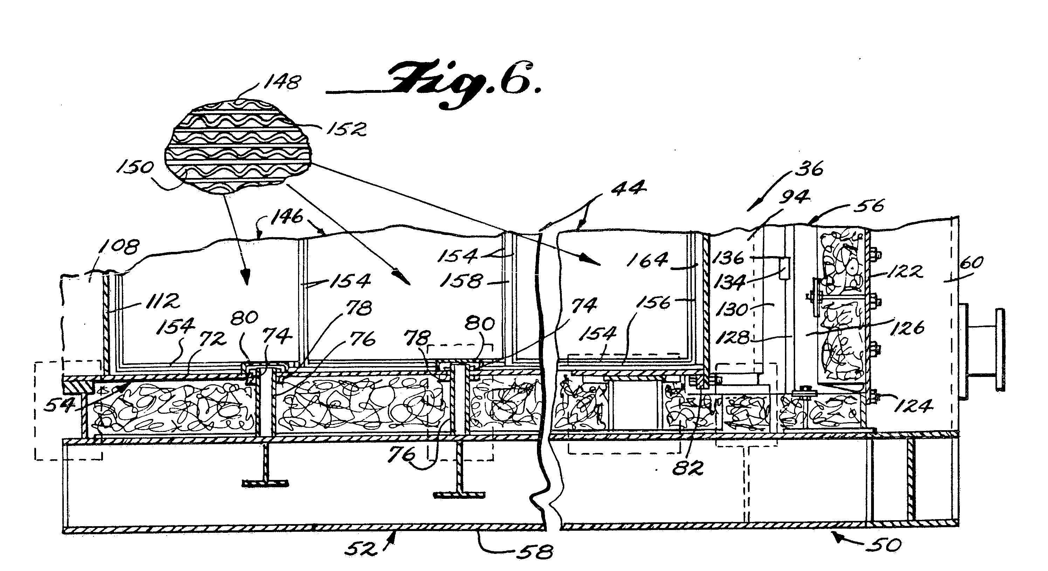

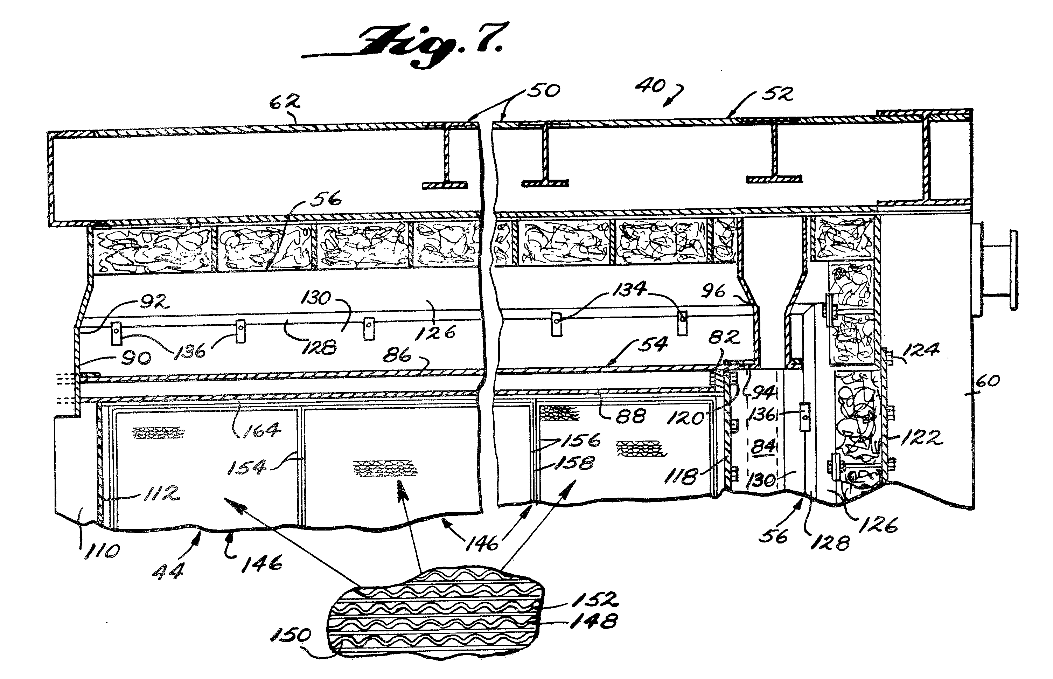

The exterior side of each panel receiving space has two panel receiving openings which are closed by door members 118 fixed to the associated side frame structure 82, as by bolts 120 or the like. Each door member 118 constitutes a final interior side frame member which, with the associated other three, serves to mount the associated CO or NO$_x$ catalyst panel assemblies in the associated space. To this end, it will be understood each door member 118 has fixedly mounted on the interior surface thereof a corresponding series of elongated panel retaining elements 116. As best shown in Figures 3, 6, and 7, the outer side wall frame sections 60 of the outer peripheral frame structure 52 are provided with six pairs of corresponding insulated door members 122 which are suitably detachably fixed in position, as by bolts 124 or the like.

Referring now more particularly to Figure 8, the expansible and contractible peripheral seal assembly 56 is illustrated in cross-sectional detail therein. The view shown therein is taken along the bottom frame sections of the outer and inner peripheral frame structures 52 and 54 respectively. It will be understood that the cross-sectional configuration of the seal assembly 56 is similar along the side frame sections of the two frame structures and along the top frame sections as well. The arrangement is such that the cross-sectional configuration is similar throughout except that the amount of expansion and contraction which must be accommodated is greater along the top than along the bottom and varies along the sides. Moreover, it will be understood that there is a seal assembly 56 both at the upstream side of the two frame structures as well as at the downstream side thereof.

With the above in mind, it will be noted that the peripheral seal assembly 56 includes an outer peripheral plate-like seal element 126 which is fixed at one end, as by welding or the like, to the outer peripheral frame structure 52 and extends radially inwardly therefrom and terminates in an angular sealing edge 128. The seal assembly 56 also includes an inner peripheral seal element 130 which is fixed, as by welding or the like, to the inner peripheral frame structure 54 and extends radially outwardly therefrom in spaced parallel relation with the outer peripheral seal element 126. The inner peripheral seal element 130 also terminates in an angular sealing edge 132 similar to the sealing edge 128 of the outer peripheral seal element 126. These two sealing edges are disposed and retained in slidable sealing relation to the associated seal elements, by a series of bolt assemblies including bolts 134. The head of each bolt 134 engages a washer plate 136 which, in turn, engages the outer peripheral seal element 126 on the exterior surface thereof. Each bolt 134 extends through an associated opening 138 in the outer seal element 126 and through a larger hole 140 formed in the inner peripheral seal element 130. It will be understood that the holes 140 get progressively larger in a horizontal direction outwardly from the center of the bottom and top sections of the inner peripheral seal element 130 and progressively increase in vertical dimension along the side sections thereof from bottom to top. A second washer 142 is fixed exteriorly of each larger opening 140 to seal the same. Each bolt assembly includes a nut 144 threadedly engaged on an associated bolt 134 in engagement with an associated second washer 142. The arrangement is such that the washers 136 and 142 prevent the passage of gases through the openings 138 and 140 while the peripheral sealing edges 128 and 130 engaging with the sealing elements 130 and 126, respectively, prevent flow of gas between the two peripheral seal elements. The arrangement is such as to compensate for temperature responsive expansion and contraction of the inner peripheral frame structure 54 with respect to the outer peripheral frame structure 52 by the aforesaid sliding seal arrangement.

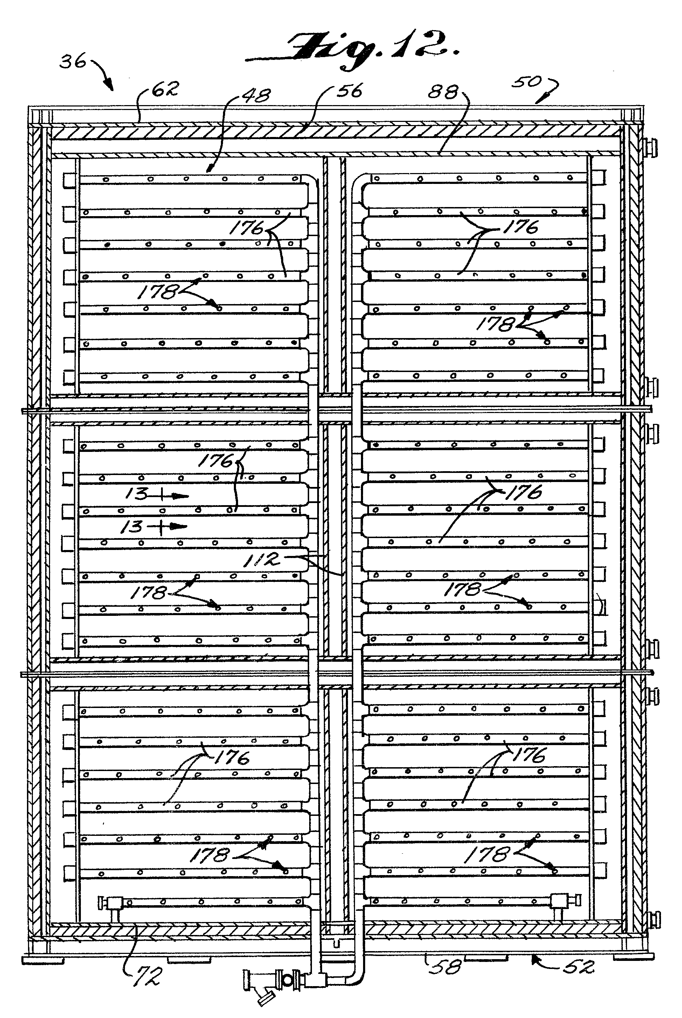

Referring now more particularly to Figures 9-11, the construction of one of the multiplicity of CO catalyst panel assemblies 44 will now be described, it being understood that all of the other ones are of similar construction. It will also be understood that all the NO$_x$ catalyst panel assemblies 46 are of similar construction except for the catalyst as will be apparent hereinafter. As shown, the CO catalyst panel assembly 44 is formed from a multiplicity of catalyst block units, generally indicated at 146. Each catalyst block unit 146 consists of a catalyst block 148 which may be of any known configuration. For example, each catalyst block 148 may be of honeycomb cross-sectional configuration formed from alternating flat and corrugated metal alloy plates presenting a multiplicity of passages 150 through which exhaust gases may flow. A CO catalyst 152 of any well known type is adhered to the surface of the catalyst block 148 so as to engage and provide a catalytic conversion action with the gases flowing through the passages 150. A preferred example is aluminum oxide, rhodium and platinum. It will be understood that each of the NO$_x$ catalyst panel assemblies 46 has a selective catalytic reducing catalyst adhered to the surface of the catalyst block 148 rather than the CO catalyst 152. An exemplary SCR catalyst is a platinum-rhodium alloy.

As best shown in Figure 11, each block 148 is encased within a peripheral frame 154 of channel shaped cross-sectional configuration. The catalyst block units 146 are fixed together in clusters of four by an exterior peripheral frame structure consisting of four side frame members 156 and vertical and horizontal interior frame members 158 and 160, respectively. The frame members 156, 158 and 160 are suitably welded to each other and to the frames 154 of the block units 146.

The elongated elements 116 affixed to the interior side frame members of the inner peripheral frame structure 54 function as a part of a cooperating support means for removably supporting the multiplicity of catalyst panel assemblies 44 and 46 within the panel support assembly 50. As shown, the exterior frame members 156 of each catalyst panel assembly 44 and 46 is provided with cooperating support means which also serves as a guard means for an inwardly yieldable high temperature resistant seal assembly, generally indicated at 162, which is positioned between the exterior periphery of each catalyst panel assembly and the interior side frame members supporting the same. It will be understood that the seal assemblies 162 could be provided as an integral part of the inner peripheral frame structure 52, however, as shown, it is preferred that each seal assembly 162 be mounted on the exterior periphery of each removable catalyst panel assembly 44 or 46 so as to render the seal assembly 162 capable of simple servicing with the panel assembly once it is removed for servicing. As shown, the guard means is in the form of a pair of spaced elongated guard elements 164 and 166 extending along the exterior surface of each of the exterior side frame members 156 of each panel assembly 44 or 46. Preferably, the upstream guard elements 164 are rigidly secured to the exterior surfaces of the exterior side frame members 156, as by welding or the like. The downstream guard elements 166, however, are preferably detachably fixedly secured to the associated side frame members 156, as by a series of bolt assemblies 168.

As best shown in Figure 11, each seal assembly 162 preferably consists of four spring metal seal plates 170 each of which includes a marginal edge portion 172 which is suitably apertured and removably mounted between an associated guard element 166 and an associated side frame member 156, by an associated bolt assembly 168. Each spring metal seal plate 170 includes a remaining cantilevered angular sealing portion 174 which is disposed wholly between the associated guard elements 164 and 166. The angular position of the marginal seal portion 174 of each seal plate 170 is such as to engage the associated surface of the associated elongated element 116 when a panel assembly 44 or 46 is disposed in operative position. It will also be noted that the upper and lower associated pairs of elongated elements 116 serve as tracks for enabling the upper and lower pairs of guard elements 164 and 166 of each panel assembly 44 or 46 to be guidingly moved horizontally into an associated space with a horizontal sliding movement. During this movement, the upper and lower seal portions 174 engage the surfaces of the associated elongated elements 116 and are deflected inwardly. When the panel assembly 44 or 46 reaches its operative position, the vertical elongated element 116 carried by the associated vertical side frame member 112 engages the associated cantilevered spring seal portion 174. Finally, when the associated door member 118 is moved into position, the associated elongated element 116 thereof is likewise moved between the associated guard elements 164 and 166 and into flexing engagement with the associated spring seal portion 174. It will be noted that the interengagement of the elongated elements 116 with the guard elements 164 and 166 provide for a certain amount of blockage of the flow of gas between the exterior periphery of each catalyst panel assembly and the associated interior side frame members of the panel support assembly. Nevertheless, the flow of gas is such that it will impinge upon the surface of each spring seal portion 174 in such a way as to tend to increase its sealing engagement with the associated elongated element 116.

Referring now more particularly to Figures 12-14, a preferred form of the sparger assembly 48 is shown therein. As previously indicated, it is preferable to include the sparger assembly 48 within the support assembly 50 at a position downstream and adjacent the CO catalyst panel assemblies 44 and spaced upstream from the $NO_x$ catalyst panel assemblies 46. In its broadest aspects, the invention contemplates placing the sparger assembly 48 in a normal spacing upstream from a combined support assembly in which the $NO_x$ catalyst panel assemblies 46 are disposed at the upstream end while the CO catalyst panel assemblies 44 are disposed at the downstream end. While such an arrangement can be utilized, it is not preferred for the reason that there is a tendency for residual ammonia to reform nitrous oxides after flow through the SCR catalyst panel assemblies and then through the CO catalyst panel assemblies. The mounting of the sparger assembly 48 within the support assembly 50 presents a gas mixture situation which is different from the conventional sparger assembly situation. In the latter, the sparger assembly is spaced upstream from the SCR panel assemblies and heat exchanger tubes are disposed in the path of gas movement between the sparger assembly and the panels themselves. The flow of the two gases together through the heat exchanger tubes in the flowpath tend to materially aid the mixing so that when the two gases finally reach the SCR catalyst, they are sufficiently mixed. In the present situation, the distance between the sparger assembly 48 and the SCR catalyst panel assemblies 46 is considerably less. Moreover in order to reduce costs, it is preferable that the space be left open without gas engaging structures which would facilitate mixing. In the arrangement shown, the sparger assembly 48 includes a regular net work of pipes 176 which are suitably fixed to the support assembly 50 and extend transversely across the gas passage provided thereby at a position downstream and adjacent the CO catalyst panel assemblies 44. As shown, each pipe 176 in the network extends horizontally so that the network within each catalyst panel assembly space consists essentially of a series of parallel horizontally extending pipes 176. Mounted in the downstream side of each pipe is an emitter, generally indicated at 178. As shown, the emitters 178 are mounted in successive pipes in staggered relation. Moreover, the spacing between adjacent emitters 178 in each pipe 176 is related to the spacing between adjacent parallel pipes 176 so that each emitter 178 is essentially equally spaced from six adjacent emitters.

As best shown in Figures 13 and 14, Each emitter 178 includes a body 180 having an inlet 182 threadedly engaged in the associated pipe 176. Each body 180 leads to a plurality of annularly spaced orifices or nozzles 184. As shown, the nozzles 184 are of round configuration. They may assume other configurations as, for example, an elongated arcuate configuration extending approximately 45°. The nozzles 184 direct the high pressure ammonia within the pipes 176 at sonic velocities outwardly into the gas passage in the direction of gas flow. Each emitter 178 includes an annular baffle 186 which extends in a downstream direction from the central portion of the emitter body 180 and then flairs outwardly along an arcuate path through an angle of approximately 180°. The baffle 186 serves to direct the ammonia flowing outwardly through the nozzles 184 at sonic velocities into a transverse sheet formation so that there is provided essentially a continous transversely disposed supply of ammonia substantially throughout the flowpath of the exhaust gases immediately after they flow through the network of pipes 176 so that fixing with the ammonia occurs in a relatively short distance of movement together after initial contact is made.

It thus will be seen that the objects of this invention have been fully and effectively accomplished. It will be realized, however, that the foregoing preferred specific embodiment has been shown and described for the purpose of illustrating the functional and structural principles of this invention and is subject to change without departure from such principles. Therefore, this invention includes all modifications encompassed within the scope of the following claims.

## Claims

1. A waste heat recovery system comprising means defining a gas passage for directing exhaust gases to flow along a discharge path, heat exchange tube means within said gas passage for directing a continuous supply of feedwater in heat exchange relation with said exhaust gases; CO-removing means mounted in said gas passage for removing CO from said exhaust gases by creating a chemical reaction with the exhaust gases; and $NO_x$-removing means mounted in said gas passage for removing $NO_x$ from said exhaust gases by creating a chemical reaction with a mixture of a chemical additive and the exhaust gases, characterized in that both of said removing means are mounted in a common zone of substantially uniform temperature.

2. A system as claimed in Claim 1, wherein said CO-removing means is mounted upstream from said $NO_x$-removing means.

3. A system as claimed in Claim 2, wherein sparger means is mounted in said uniform temperature zone between said CO-removing means and said $NO_x$-removing means for continuously introducing said chemical additive in such a way as to accomplish the mixing of the introduced chemical additive with the exhaust gases within said uniform temperature zone.

4. A system as claimed in any one of the preceding claims, wherein said gas passage defining means includes a separate peripheral support assembly defining said uniform temperature zone and said CO-removing means, said $NO_x$-removing means and, if present, said sparger means are supported in said support assembly.

5. A system as claimed in Claim 4, wherein said CO-removing means comprises a group of first catalyst panel assemblies mounted within said support assembly, each of said first catalyst panel assemblies including first porous substrate means positioned to permit passage of exhaust gases therethrough and CO-removal catalyst means on said first porous substrate means for contacting exhaust gases passing through said first porous substrate means to create the CO-removal chemical reaction.

6. A system as claimed in Claim 5, wherein said $NO_x$-removing means comprises a group of second catalyst panel assemblies mounted within said support assembly, each of said second panel assemblies including second porous substrate means positioned to permit passage of the mixture of the chemical additive and exhaust gases therethrough and selective catalytic reducing catalyst means on said second porous substrate means for contacting the mixture of the chemical additive and exhaust gases passing through said second porous substrate means to create the $NO_x$-removal chemical reaction.

7. A system as claimed in Claim 5 or Claim 6, wherein each of said first catalyst panel assemblies comprises a first peripheral panel frame structure defining a first central area, said first porous substrate means comprising a plurality of first catalyst blocks each providing first passages for the flow of exhaust gases therethrough, said CO catalyst means being carried by said first catalyst blocks in a position to contact the exhaust gases flowing through said first passages, and means fixed to said first panel frame structure for supporting said first blocks in side-by-side relation within said first central area so that the first passages of said first catalyst blocks provide the sole gas flow path through the first central area of the first panel frame structure.

8. A system as claimed in Claim 6 or Claim 7, wherein each of said second catalyst panel assemblies comprises a second peripheral panel frame structure defining a second central area, said second porous substrate means comprising a plurality of second catalyst blocks each providing second passages for the flow of exhaust gases mixed with said chemical additive therethrough, said selective catalytic reducing catalyst means being carried by said second block in a position to contact the gasses flowing through said second catalyst passages, and means fixed to said second panel frame structure for supporting said second catalyst blocks in side-by-side relation within said second central area so that the second passges of the said second catalyst blocks provide the sole gas flow path through the second central area of the second panel frame structure.

9. A system a claimed in Claim 8, wherein said support assembly includes an outer ambient temperature peripheral frame structure, an inner high temperature peripheral frame structure mounted within said outer peripheral frame structure for temperature responsive expansion and contraction with respect thereto, and expansible and contractible high temperature resistant peripheral seal means between the inner and outer peripheral frame structures for maintaining a flow-preventing seal between said inner and outer peripheral frame structures, said inner peripheral frame structure including means for removably receiving each catalyst panel assembly and supporting the same in an operative position within the exterior periphery of said inner peripheral frame structure, door means openable to permit said catalyst panel assemblies to be moved in and removed from their respective operative positions and closable to fixedly secure said catalyst panel assemblies in their respective operative positions within the exterior periphery of said inner peripheral frame structure, each panel frame structure exteriorly cooperating with the associated door means and the associated interior of said inner peripheral frame structure so as to ensure that the flow of high temperature exhaust gases within said gas passage is substantially solely through the passages of the catalyst blocks of the plurality of catalyst panel assemblies when fixedly secured in their respective positions.

10. A system as claimed in any one of Claims 4 to 9, wherein sparger means for introducing said chemical additive comprises a regular network of pipes within said support assembly extending transversely across said gas passage downstream and adjacent said CO-removing means and spaced upstream from said $NO_x$ removing means, and a multiplicity of regularly spaced emitters connected with said pipes for emitting a chemical additive under pressure contained therein.

11. A system as claimed in Claims 10, wherein each emitter includes nozzle means positioned to emit the chemical additive in a downstream direction and baffle means for deflecting and dispersing the chemical additive emitted from said nozzle means in a transverse direction so as to form, with the other emitters, a continuous transversely dispersed supply of chemical additive substantially throughout the flow path of said exhaust gases immediately after flow through said network of pipes so that mixing occurs in a relatively short distance of movement together after initial contact.

12. An apparatus for effecting high temperature catalytic conversion treatment of exhaust gases flowing in a gas passage discharge flow path of an industrial installation comprising a plurality of separate catalyst panel assemblies, and a panel support assembly arranged to be mounted within the exhaust path and to separately removably support each of said plurality of catalyst panel assemblies so that high temperature exhaust gases within the gas passage will flow therethrough in operation and each panel assembly can be conveniently serviced by simple removal, each of said catalyst panel assemblies comprising a removable peripheral panel frame structure defining a central area, a plurality of catalyst blocks each providing passages for the flow of exhaust gases therethrough, catalyst means carried by said blocks in a position to contact the gases blowing through said passages, and means fixed to said panel frame structure for supporting said plurality of blocks in side-by-side relation within said central area so that the passages of the said side-by-side blocks provide the sole gas flow path through the central area of the panel frame structure, said panel support assembly comprising an outer ambient temperature peripheral frame structure and an inner high temperature peripheral frame structure mounted within said outer peripheral frame structure, said inner peripheral frame structure including means for removably receiving the catalyst panel assemblies and supporting the same in operative positions within the exterior periphery of said inner peripheral frame structure door means operable to permit said catalyst panel assemblies to be moved in and removed from their respective operative positions and closable to fixedly secure said plurality of catalyst panel assemblies in their respective operative positions within the exterior periphery of said inner peripheral panel frame structure, and each panel frame structure exteriorly cooperating with the associated door means and the associated interior of said inner peripheral frame structure so as to ensure that the flow of high temperature exhaust gases within said exhaust path is substantially solely through the passages of the catalyst blocks of the plurality of catalyst panel assemblies when fixedly secured in their respective operative positions, characterized in that said plurality of catalyst panel assemblies includes two groups of catalyst panel assemblies, each group when fixedly secured in their respective operative positions providing passages for the entire flow of exhaust gases within the gas passage so that the exhaust gases flow sequentially through the passages of both groups of catalyst panel assemblies, the catalyst means of one of said two groups of catalyst panel assemblies is operable to remove CO from exhaust gases by a chemical reaction with the exhaust gases, and the catalyst means of the other of the two groups of catalyst panel assemblies is operable to remove $NO_x$ from the exhaust gases by a chemical reaction with a mixture of the exhaust gases and a chemical additive.

13. An apparatus as claimed in Claim 12, wherein said one group of catalyst panel assemblies is spaced upstream from the other group of catalyst panel assemblies and a sparger assembly is mounted in said panel support assembly between said groups of catalyst panel assemblies for introducing the chemical additive to the exhaust gases in such a way as to be mixed therewith for flow in contact with said $NO_x$-removing catalyst means.

14. An apparatus as claimed in Claim 13, wherein said sparger means comprises a regular network of pipes within said support assembly extending transversely across said gas passage downstream and adjacent said first catalyst panel assemblies and spaced upstream from said second catalyst panel assemblies, and a multiplicity of regularly spaced emitters connected with said pipes for emitting a chemical additive under pressure contained therein.

15. An apparatus as claimed in Claim 14, wherein each emitter includes nozzle means positioned to emit the chemical additive in a downstream direction and baffle means for deflecting and dispersing the chemical additive emitted from said nozzle means in a transverse direction so as to form with the other emitters a continuous transversely dispersed supply of chemical additive substantially throughout the flow path of said exhaust gases immediately after flow through said network of pipes so that mixing occurs in a relatively short distance of movement together after initial contact.

16. A waste heat recovery method in which exhaust gases are directed to flow along a discharge path in heat exchange relation with a continuous supply of feedwater; CO is removed from the exhaust gases flowing along said path by creating a chemical reaction with the exhaust gases in the presence of a catalyst; and $NO_x$ is removed from the exhaust gases flowing along said path by creating a chemical reaction with a mixture of ammonia and the exhaust gases in the presence of a catalyst; characterized in that the CO and $NO_x$ removal are conducted at substantially the same temperature.

17. A method as claimed in Claim 16, wherein said CO removal takes place in said gas passage upstream from said $NO_x$ removal and said ammonia is continuously introduced to said exhaust gases after the CO removal has taken place in such a way as to accomplish the mixing of the introduced ammonia with the exhaust gases while at said temperature.

18. A method as claimed in Claim 16 or Claim 17, wherein said temperature is within the range of 350°C to 400°C (650°F to 750°F).

*Fig.2.*

*Fig.1.*

EP 0 326 388 A2

*Fig.3.*

*Fig. 4.*

Fig.5.

Fig.6.

*Fig. 7.*

EP 0 326 388 A2

EP 0 326 388 A2

Fig. 11.

Fig. 8.

Fig. 13.

Fig. 14.

_Fig.9._

_Fig.10._

EP 0 326 388 A2

Fig. 12.